# EUROPÄISCHE PATENTSCHRIFT

(11) **EP 1 407 307 B1**
(45) Veröffentlichungstag und Bekanntmachung des Hinweises auf die Patenterteilung: **19.01.2005**
(21) Anmeldenummer: 02784824.1
(22) Anmeldetag: 10.05.2002
(51) Int. Cl.: G02B 21/00, G02B 21/06, G02B 21/08

(54) **VORRICHTUNG ZUR BELEUCHTUNG EINES BETRACHTUNGSFELDES, BEISPIELSWEISE EINES OBJEKTFELDES UNTER EINEM MIKROSKOP, DURCH EINE ZUSATZBELEUCHTUNG**
DEVICE FOR ILLUMINATING AN OBSERVATION FIELD, FOR EXAMPLE, AN OBJECT FIELD UNDER A MICROSCOPE, BY MEANS OF AN ADDITIONAL ILLUMINATION DEVICE
DISPOSITIF POUR ECLAIRER UN CHAMP D'OBSERVATION TEL QU'UN CHAMP D'OBJET SOUS UN MICROSCOPE AU MOYEN D'UN SYSTEME D'ECLAIRAGE SUPPLEMENTAIRE

(30) Priorität: 07.07.2001 DE 10133064
(43) Veröffentlichungstag der Anmeldung: 14.04.2004
(73) Patentinhaber: Leica Microsystems (Schweiz) AG, 9435 Heerbrugg (CH)
(72) Erfinder: SIDLER, Bruno, CH-9242 Oberuzwil (CH)
(74) Vertreter: Rosenich, Paul, Dipl.-Ing.
(86) Internationale Anmeldenummer: PCT/EP2002/005160
(87) Internationale Veröffentlichungsnummer: WO 2003/007047

(56) Entgegenhaltungen:
- EP-A- 1 184 615
- DE-A- 3 151 108
- DE-A- 19 822 255
- DE-A- 19 854 722
- US-A- 2 349 457
- US-A- 4 870 964
- PATENT ABSTRACTS OF JAPAN vol. 1999, no. 08, 30. Juni 1999 (1999-06-30) -& JP 11 084257 A (OLYMPUS OPTICAL CO LTD), 26. März 1999 (1999-03-26)

## Beschreibung

Die Erfindung betrifft eine Vorrichtung zur Zusatzbeleuchtung eines Betrachtungsfeldes, beispielsweise eines Objektfeldes unter einem Mikroskop, mit einer zusätzlichen Lichtquelle.

Zusatzbeleuchtungen für Mikroskope werden bei verschiedensten Anwendungen, insbesondere im Bereich der Medizinal- und Dentaltechnik, eingesetzt. Beispielsweise in der Dentaltechnik werden Compositfüllungen aus UV-härtbarem Material im Mund des Patienten geformt und vor Ort ausgehärtet. Für präzises Arbeiten verwendet der Zahnarzt dabei ein Mikroskop, z.B. das M300 Dent des Anmelders. Dieses bekannte Mikroskop verfügt über eine Mikroskopbeleuchtung direkt durch das Hauptobjektiv. Die Mikroskopbeleuchtung wird über ein Glasfaserkabel von einer externen Lichtquelle gespeist. Diese Beleuchtung dient dem Zahnarzt dazu, den Behandlungsort gut auszuleuchten.

Das M690 des Anmelders ist ein Operationsmikroskop für unterschiedliche Ansprüche. Es verfügt über eine integrierte Lichtquelle. Diese beleuchtet den Operationsort ebenfalls durch das Hauptobjektiv. Als Zusatzeinrichtung kann jedoch auch ein sog. "Schwanenhals" mittels eines Glasfaserkabels an die gleiche Lichtquelle angeschlossen werden. Dieser Schwanenhals kann dann an seinem Ausgang so gebogen werden, dass er den Operationsort mit dem von der gleichen Lichtquelle stammenden Licht von einer anderen Seite her - z.B. schräg - beleuchtet. Im Dentalbereich ist ein solcher Aufbau grundsätzlich nicht vorgesehen und würde nach Ansicht der Fachwelt auch keine Verbesserung bringen, da der Behandlungsort relativ klein ist und immer in einer Höhle, nämlich der Mundhöhle des Patienten, liegt. Eine seitliche Beleuchtung würde somit durch die Wangen des Patienten behindert.

Arbeitet der Zahnarzt mit Compositfüllungen, so benötigt er als zusätzliches Hilfsmittel eine Polymerisationsleuchte, die von Hand gehalten wird und über einen Glasfaserstab hochenergetisches UV-Licht zur Polymerisation des Composit-Werkstoffs zum Füllungsort leitet.

Der Erfinder erkannte, dass die bekannten Systeme nachteilig sind in Bezug auf die folgenden Punkte:
a) Die Bedienung der zusätzlichen Leuchte erfolgt durch die Assistentin des Zahnarztes, so dass im näheren Arbeitsbereich das Mikroskop, die Leuchte, seine eigene Hand und gegebenenfalls ein Arbeitswerkzeug sowie die Hand der Assistentin mit der Polymerisationsleuchte gleichzeitig anwesend ist. Zudem kommt noch eine Filtereinrichtung zur Abschirmung der UV-Strahlen des Polymerisationslichtes in den Strahlengang des Mikroskops und/oder des Betrachters hinzu. Weder für den Patienten noch für den Arzt selbst ergibt sich daraus eine gute Arbeitsplatzsituation.
b) Da das Steuergerät der Zusatzbeleuchtung ein externes Gerät ist, ergibt sich eine komplizierte Handhabung der Speisungskabel der zusätzlichen Lichtquelle bzw. des von Hand gehaltenen Glasfaserstabes und eine zusätzliche gewichtsmäßige Belastung für die Assistentin.

Der Erfindung liegt somit primär die Aufgabe zu Grunde, eine Vorrichtung zu schaffen, welche die Beleuchtung eines Objektfeldes mittels einer zusätzlichen Lichtquelle erlaubt, welche in den Mikroskopaufbau integriert ist, die angegebenen Nachteile vermeidet und damit die Arbeitssituation eines Zahnarztes, der mit Compositfüllungen arbeitet, verbessert.

Gelöst wird diese Aufgabe durch:
i) Einsatz einer Zusatzbeleuchtung, die am Mikroskop oder dessen Stativ befestigt ist (ähnlich dem erwähnten Aufbau gemäß M690 der Anmelderin), mit dem Unterschied, dass diese Zusatzbeleuchtung nicht an der vorhandenen Lichtquelle angeschlossen ist, sondern über eine eigene Lichtquelle verfügt, mit der u.a. Aushärte-Lichtfrequenzen auf den Behandlungsort gestrahlt werden können. Diese Zusatzleuchte kann gemäß einer Weiterbildung in ihrem Lichtausgangsbereich ähnlich einer herkömmlichen Polymerisationsleuchte - beispielsweise mit einem Glasfaserstab - geformt sein, um die Erfordernisse des Behandlungsortes optimal zu erfüllen.
ii) Ein an sich bekannter schwanenhalsähnlicher Halter einer erfindungsgemäßen Zusatzleuchte ist einerseits plastisch verformbar, andererseits so stabil, dass er, wenn er auf den behandelten Zahn aufgesetzt wird, wie von Hand gehalten positioniert bleibt.
iii) Ein Lichtsteuergerät (Energieversorgung) der Zusatzbeleuchtung ist im oder am Mikroskopaufbau - entweder im Stativfuß oder im Stativarm - integriert.

Gemäß einer besonderen Ausgestaltung ist ein Sichtschutzfilter am Mikroskop in der Weise mit der Energieversorgung der Zusatzbeleuchtung gekoppelt, dass beim Betrieb der Zusatzbeleuchtung zwingend auch das UV-Filter vorgeschaltet ist.

Die Situation am Behandlungsort wird damit durch die Erfindung dahingehend verbessert, dass
- durch den erfindungsgemäß am Mikroskop befestigten, flexiblen Schwanenhals die Bedienung durch die Assistentin entfallen kann und damit auch die haltende Hand für die Polymerisationsleuchte aus dem Gesichtsfeld des Zahnarztes verschwindet;
- durch die Integration des Steuergerätes der Zusatzbeleuchtung in den Stativfuß bzw. den Stativarm der Bedarf eines zusätzlichen Aufstellungsortes entfällt, wodurch das bislang bestehende Problem der Kabelführung und -handhabung nicht mehr besteht;
- gemäß der erfindungsgemäßen Koppelung der Zusatzbeleuchtung mit dem Vorschalten des Sichtschutzfilters die manuelle Bedienung des Filters entfällt, was die Handhabung vereinfacht und keine Totzeiten verursacht, in welchen der Zahnarzt in seiner Sicht beeinträchtigt wird.

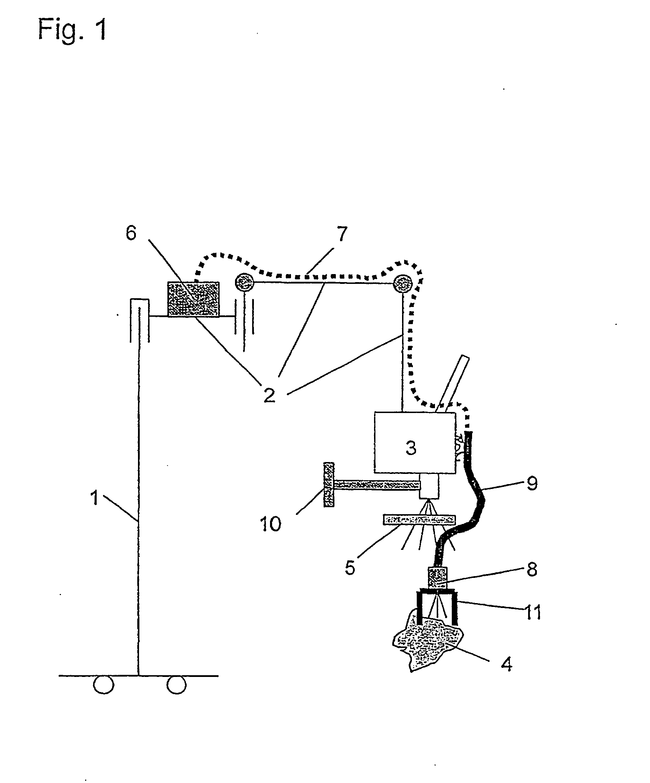

Die Bezugszeichenliste und die Fig.1 bis Fig.3 sind zusammen mit den in den Ansprüchen beschriebenen Gegenständen integrierender Bestandteil der Offenbarung dieser Anmeldung.

### Figurenbeschreibung

Die Figuren werden zusammenhängend und übergreifend beschrieben. Gleiche Bezugszeichen bedeuten gleiche Bauteile; Bezugszeichen mit unterschiedlichen Indizes geben funktionsgleiche Bauteile an. Es zeigen:
- Fig.1:: einen symbolischen Gesamtaufbau eines Operationsmikroskops mit zusätzlicher Lichtquelle am Schwanenhals und ins Stativ integriertem Steuergerät;
- Fig.2:: einen symbolischen Gesamtaufbau eines Operationsmikroskops mit zusätzlicher Lichtquelle direkt am Mikroskop und ins Stativ integriertem Lichtsteuergerät und
- Fig.3:: einen symbolischen Gesamtaufbau eines Operationsmikroskops mit direkt im Lichtsteuergerät integrierter Lichtquelle.

Fig.1 zeigt schematisch den Gesamtaufbau eines Operationsmikroskops mit einem Stativfuß 1, einem Stativarm 2, einem Mikroskop 3, einem zu betrachtenden Objekt(-feld) 4, einem Sichtschutzfilter 5, einem erfindungsgemäß in das Stativ integrierten Lichtsteuergerät 6, einem Kabel 7 für die Speisung der zusätzlichen Lichtquelle 8, einem erfindungsgemäß plastisch verformbaren schwanenhalsähnlichen Halter 9, einem manuellen Ein- / Ausschalter 10 der Zusatzbeleuchtung sowie einer Hülse 11.

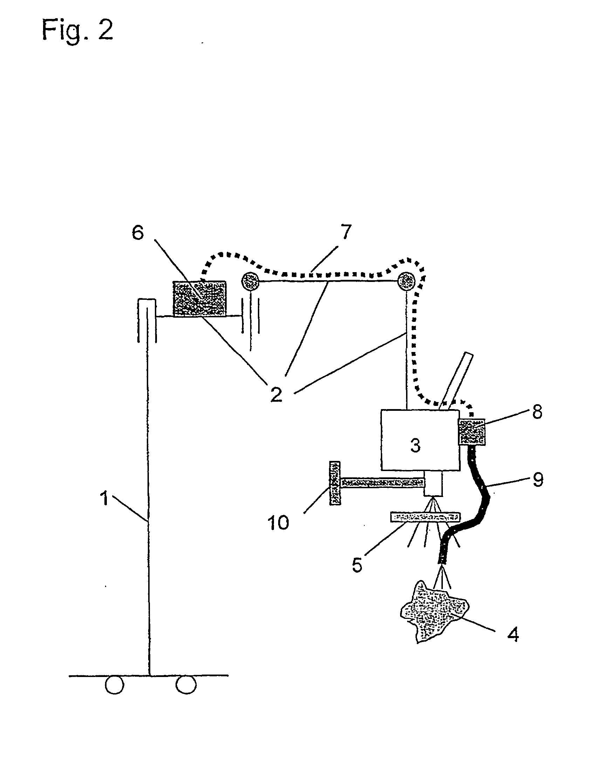

Die Fig.2 zeigt als Variante zu Fig.1 einen schematischen Gesamtaufbau eines Operationsmikroskops mit einer Zusatzbeleuchtung, wobei die Lichtquelle 8 der Zusatzbeleuchtung statt am schwanenhalsähnlichen Halter 9 direkt am Mikroskop 3 befestigt ist und das Licht über einen Lichtwellenleiter im schwanenhalsähnlichen Halter 9 zum Objekt 4 geführt wird.

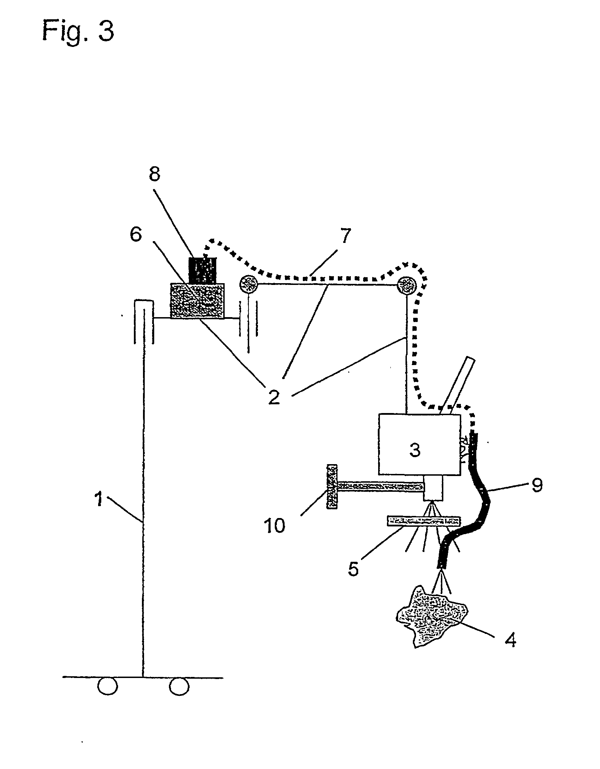

Die Fig.3 zeigt als weitere Variante zu Fig.1 einen schematischen Gesamtaufbau eines Operationsmikroskops mit einer Zusatzbeleuchtung, wobei die Lichtquelle 8 der Zusatzbeleuchtung statt am schwanenhalsähnlichen Halter 9 direkt ins Lichtsteuergerät 6 integriert ist und das Licht durch einen Lichtwellenleiter über den schwanenhalsähnlichen Halter 9 zum Objekt 4 geführt wird.

### Funktionsweise

Für bestimmte Anwendungen - insbesondere im Dentalbereich - wird eine zusätzliche Lichtquelle, in der Regel eine UV-Lichtquelle, zur Beleuchtung spezifischer Objektfelder 4 benötigt. Erfindungsgemäß wird diese Lichtquelle 8 an einem schwanenhalsähnlichen Halter 9 angebracht, welcher direkt am Mikroskop 3 befestigt ist. Der schwanenhalsähnliche Halter 9 ist so ausgebildet, dass er plastisch verformbar, aber trotzdem so stabil ist, dass er, auf das Objekt 4 aufgesetzt bzw. das Objekt 4 berührend, wie von Hand gehalten wird. Gegebenenfalls wird am Ausgang des schwanenhalsähnlichen Halters 9 eine Hülse 11 angebracht, die direkt über einen Zahn gesetzt werden kann und unerwünschte UV-Abstrahlungen verhindert.

Im weiteren ist, um zusätzlichen Platz zu sparen und eine einfache Handhabung der zusätzlichen Lichtquelle 8 zu erreichen, das Lichtsteuergerät 6 (Energieversorgung und/oder Schaltuhr oder dergleichen) in den Stativfuß 1 oder Stativarm 2 integriert bzw. daran befestigt.

Erfindungsgemäß ist die Ansteuerung zum Vorschalten des Sichtschutzfilters 5 in den Hauptstrahlengang des Mikroskops 3 - an beliebiger Stelle - mit der Ansteuerung der Zusatzbeleuchtung gekoppelt, d.h. ein Einschalten der Zusatzbeleuchtung verlangt dann zwingend das Vorschalten des Sichtschutzfilters 5. Das Sichtschutzfilter 5 kann auch oberhalb der Mikroskopbeleuchtung angeordnet sein, wenn die Mikroskopbeleuchtung selbst keine 'schädlichen' UV-Strahlen abgibt.

Der manuelle Ein- / Ausschalter 10 der Zusatzbeleuchtung kann erfindungsgemäß direkt am Mikroskop 3 angeordnet oder als Fußschalter ausgebildet sein.

Als Variante des Aufbaus gemäß Fig.1 wird in Fig. 2 die zusätzliche Lichtquelle 8 direkt am Mikroskop 3 angebracht und das Licht über einen Lichtwellenleiter im Inneren des schwanenhalsähnlichen Halters 9 dem Objekt(-feld) 4 zugeführt.

Als weitere Variante wird die zusätzliche Lichtquelle 8 direkt in das Lichtsteuergerät 6 integriert. Das Licht wird über einen flexiblen Lichtwellenleiter zum schwanenhalsähnlichen Halter 9 und über diesen dem Objekt (-feld) 4 zugeführt.

### Bezugszeichenliste

- 1: Stativfuß
- 2: Stativarm
- 3: Mikroskop
- 4: Objekt(-feld)
- 5: Sichtschutzfilter
- 6: Lichtsteuergerät (Energieversorgung)
- 7: Kabel (für die Speisung der Lichtquelle)
- 8: Lichtquelle der Zusatzbeleuchtung
- 9: schwanenhalsähnlicher Halter
- 10: manueller Ein- / Ausschalter (für die Zusatzbeleuchtung)
- 11: Hülse

## Patentansprüche

1. Dental-Operationsmikroskop (3) an einem Stativ mit einem Stativfuß (1) und einem Stativarm (2), mit einer Lichtquelle zur Beleuchtung eines Betrachtungsfeldes und einer weiteren, zweiten künstlichen Lichtquelle (8) zur Beleuchtung des Betrachtungsfeldes, beispielsweise eines Objektfeldes (4) unter dem Dental-Operations-mikroskop (3), wobei die zweite Beleuchtung eine Lichtquelle (8) mit einem Lichtsteuergerät (6) und einen schwanenhalsähnlichen Halter (9) aufweist, die Lichtquelle (8) mittels des schwanenhalsähnlichen Halters (9) am Dental-Operationsmikroskop (3) fixiert ist, das Lichtsteuergerät (6) in den Stativfuß (1) oder in den Stativarm (2) integriert und/oder am Stativaufbau befestigt ist, und die Lichtquelle (8) so ausgerüstet ist, dass mit ihr UV-Aushärtelichtfrequenzen für das Aushärten von aushärtbaren Materialien auf das Objektfeld (4) strahlbar sind.

2. Dental-Operationsmikroskop (3) nach Anspruch 1, wobei am Ausgang des schwanenhalsähnlichen Halters (9) eine Hülse (11) angebracht ist, welche unerwünschte Abstrahlungen verhindert.

3. Dental-Operationsmikroskop (3) nach einem der vorhergehenden Ansprüche, wobei ein manueller Schalter (10) für das Ein- und Ausschalten der Lichtquelle (8) für die zweite Beleuchtung direkt am Dental-Operationsmikroskop (3) angeordnet und/oder als Fußschalter ausgebildet ist.

4. Dental-Operationsmikroskop (3) nach einem der vorhergehenden Ansprüche, wobei die Ansteuerung der zusätzlichen Lichtquelle (8) elektronisch erfolgt.

5. Dental-Operationsmikroskop (3) nach einem der vorhergehenden Ansprüche, wobei die Lichtquelle (8) für die zweite Beleuchtung direkt am Dental-Operationsmikroskop (3) befestigt ist und die Lichtübertragung im schwanenhalsähnlichen Halter (9) durch einen Lichtwellenleiter erfolgt.

6. Dental-Operationsmikroskop (3) nach einem der vorhergehenden Ansprüche, wobei das Kabel (7) für die Speisung der Lichtquelle (8) für die zweite Beleuchtung sowie die Lichtquelle (8) durch einen Lichtwellenleiter ersetzt ist.

7. Dental-Operationsmikroskop (3) nach einem der vorhergehenden Ansprüche, wobei ein Sichtschutzfilter (5) am Dental-Operationsmikroskop (3) mit der zweiten Beleuchtung so gekoppelt ist, dass beim Einschaften der zweiten Beleuchtung zwingend das Sichtschutzfilter (5) vorgeschaltet ist.

## Claims

1. Dental surgical microscope (3) on a stand comprising a base (1) of the stand and an arm (2) of the stand, comprising a light source for illuminating a field of view and a further, second artificial light source (8) for illuminating the field of view, for example an object field (4) under the dental surgical microscope (3), wherein the second illumination has a light source (8) with a light controller (6) and a swan neck-like holder (9) , the light source (8) is fixed to the dental surgical microscope (3) by means of a swan neck-like holder (9), the light controller (6) is integrated in the base (1) of the stand or in the arm (2) of the stand and/or is fastened to the stand structure, and the light source (8) is equipped so that its curing UV light frequencies can be radiated onto the object field (4) for curing of curable materials.

2. Dental surgical microscope (3) according to Claim 1, wherein a sleeve (11) which prevents undesired reflections is mounted at the exit of the swan neck-like holder (9).

3. Dental surgical microscope (3) according to any of the preceding Claims, wherein a manual switch (10) for switching the light source (8) for the second illumination on and off is arranged directly on the dental surgical microscope (3) and/or is in the form of a foot switch.

4. Dental surgical microscope (3) according to any of the preceding Claims, wherein the additional light source (8) is electronically actuated.

5. Dental surgical microscope (3) according to any of the preceding Claims, wherein the light source (8) for the second illumination is fastened directly on the dental surgical microscope (3) and the light transmission in the swan neck-like holder (9) is effected by means of an optical waveguide.

6. Dental surgical microscope (3) according to any of the preceding Claims, wherein the cable (7) for supplying the light source (8) for the second illumination, and the light source (8), are replaced by an optical waveguide.

7. Dental surgical microscope (3) according to any of the preceding Claims, wherein a vision protection filter (5) on the dental surgical microscope (3) is coupled to the second illumination in such a way that the vision protection filter (5) is inevitably inserted when the second illumination is switched on.

## Revendications

1. Microscope d'opération de dentiste (3) à un statif ayant un pied de statif (1) et un bras de statif (2), comprenant une source lumineuse pour éclairer un champ d'observation, et une autre, seconde, source lumineuse artificielle (8) pour éclairer le champ d'observation, par exemple un champ d'objet (4) sous le microscope d'opération de dentiste (3), le second éclairage incluant une source lumineuse (8) avec un appareil de commande de lumière (6) et un dispositif de retenue similaire à un col de cygne (9), dans lequel ladite source lumineuse (8) est fixée au microscope d'opération de dentiste (3) au moyens du dispositif de retenue similaire à un col de cygne (9), l'appareil de commande de lumière (6) est intégré dans le pied de statif (1) ou dans le bras de statif (2) et/ou est monté sur la construction de statif, et dans lequel la source lumineuse (8) est équipée de manière qu'on peut rayonner des fréquences UV de durcissement au champ d'objet (4) pour durcir des matériaux durcissables.

2. Microscope d'opération de dentiste (3) selon la revendication 1, dans lequel une douille (11) est placée à la sortie du dispositif de retenue similaire à un col de cygne (9), qui évite des rayonnements indésirables.

3. Microscope d'opération de dentiste (3) selon une quelconque des revendications précédentes, dans lequel un interrupteur manuel (10) pour mettre en circuit et pour éteindre la source lumineuse (8) pour le second éclairage est disposé directement au microscope d'opération de dentiste (3) et/ou est formé comme interrupteur à pédale.

4. Microscope d'opération de dentiste (3) selon une quelconque des revendications précédentes, dans lequel la commande de la source lumineuse supplémentaire (8) est effectuée de façon électronique.

5. Microscope d'opération de dentiste (3) selon une quelconque des revendications précédentes, dans lequel la source lumineuse (8) du second éclairage est montée directement au microscope d'opération de dentiste (3) et la transmission de lumière dans le dispositif de retenue similaire à un col de cygne (9) est effectuée par un guide d'ondes de lumière.

6. Microscope d'opération de dentiste (3) selon une quelconque des revendications précédentes, dans lequel le câble (7) pour l'alimentation de la source lumineuse (8) du second éclairage ainsi que la source lumineuse (8) sont remplacés par un guide d'ondes de lumière.

7. Microscope d'opération de dentiste (3) selon une quelconque des revendications précédentes, dans lequel un filtre de protection de vue (5) au microscope d'opération de dentiste (3) est couplé au second éclairage de manière que le filtre de protection de vue (5) est nécessairement inséré, quand le second éclairage est mis en circuit.
